# EUROPEAN PATENT APPLICATION

(11) **EP 1 277 384 A1**
(43) Date of publication of application: **22.01.2003**
(21) Application number: 02015055.3
(22) Date of filing: 05.07.2002
(51) Int. Cl.: A01D 34/64

(54) **Lawn mower vehicle fitted with a lifting device of the blade-holder apparatus**

(30) Priority: 20.07.2001 IT MI20010411 U
(71) Applicant: Ibea S.p.A., 22070 Luisago (CO) (IT)
(72) Inventor: Faverio, Danilo, 22070 Casnate con Bernate (Co) (IT); Zanirato, Renzo, 22073 Fino Mornasco (Co) (IT)
(74) Representative: Savi, Alberto

(57) **Abstract**

The present invention relates to a lawn mower vehicle fitted with a lifting device of the blade holder apparatus, characterised by the fact that it includes:
- support members (32) of the blade holder apparatus,
- at least one connecting rod (5) hinged to said support members,
- manoeuvre means (31) activated directly from the guiding position,
- at least one plate (9) which is integral with said means of manoeuvre,
- means of engagement of said plate (9), in said connecting rod (5), which allow said plate and said connecting rod to reach various mutual positions between an initial position in which said blade holder apparatus is lifted, and a second position in which said apparatus is released,
- a hooking device aimed at blocking the entire mechanism in its highest position.

## Description

The invention refers to a lawn mower vehicle provided with a device that allows for lifting of the blade from the driving position.

The lawn mower vehicles are fitted with a careened blade that cuts the grass.

Said blade, especially if placed at the front of the vehicle, is normally fitted with devices that allow to lift it in the case the vehicle comes up against a piece of land that is rather bumpy or if it has to pass over an obstruction such as, for example, a step.

On machines for professional use, of the kind normally used by professional gardeners, especially for the treatment of large surface areas, lifting is carried out by hydraulic means. Obviously operation of said mechanisms is carried out from the driving position.

Said mechanisms are, however, very expensive and they are normally incompatible with machines designed for private use, especially when used for hobbies.

In these machines the entire blade holder apparatus is normally mounted on a swinging mechanism that is activated manually by the operator who, to do so, must step out of the vehicle.

It is obvious that this kind of procedure is rather uncomfortable to carry out and, since said mechanisms normally include visible levers, these last may cause possible injury if not carried out correctly.

It is an objective of this present invention to provide economic machines for private use with a device that allows to lift the blade from the driving position, through the use of a simple mechanical device that is not servo assisted, but that does not require excessive effort by the operator.

Practically, by applying a slight pressure on a pedal, the operator can activate a device that hooks swinging arms, upon which the blade holder apparatus is fixed, and lifts them. Said swinging arms will then be blocked automatically at the highest position, as another device is provided for hooking to the vehicle frame. The release and subsequent descent of the blade to its working position will also come about in a simple way by pressing a lever that provokes the release of said hooking device.

The lifting device of the blade holder apparatus will now be described with reference to the attached drawings in which:
- figures 1 (a, b) illustrate, in a working position, the device for lifting of the blade holder apparatus on the whole, according to a side view (figure 1a) and in a layout (figure 1b);
- figure 2 illustrates, in a working position, the device for hooking and lifting of the swinging arms;
- figure 3 illustrates the device for hooking and lifting of the swinging arms at the moment when hooking for lifting occurs;
- figure 4 illustrates the device for hooking and lifting of the swinging arms (figure 4a) once lifting has occurred;
- figure 5 (a, b, c) illustrates the hooking device during the various stages of the manoeuvre.

The invention consists of a hooking and lifting device (30) that is connected at a first end to manoeuvre members (31) activated directly by the operator and, at a second end, to support members (32) of the blade holder apparatus. Furthermore, the apparatus includes a hooking device (33) that blocks the entire mechanism at the highest position when, due to the effect of the manoeuvre carried out by the operator on the manoeuvre members (31), the hooking and lifting device (30) has completely lifted the support members of the blade holder apparatus (32).

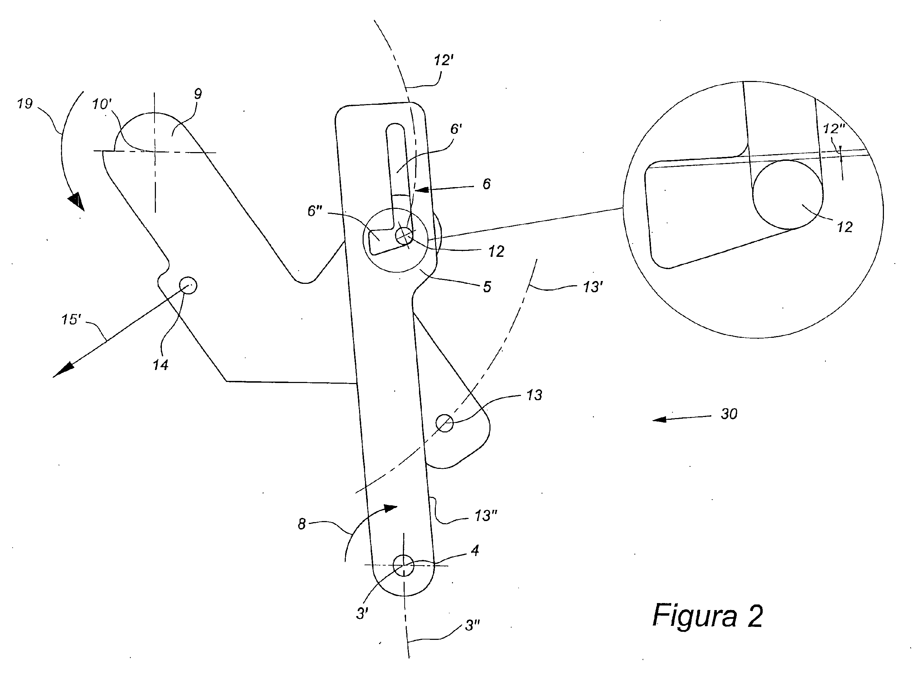

Said hooking and lifting device (30) includes a plate (9) and a connecting rod (5) that are coupled between themselves and are subject to the action of the elastic means in the manner specified here below. Said device (30) is illustrated in detail in figures 2, 3 and 4.

Said connecting rod (5) may be made, for example, with a steel plate. A slot (6) is provided in the upper part of said connecting rod (5) and includes a first branch (6'), which extends substantially longitudinally, with respect to the axis of said connecting rod (5) and a second branch (6") that forms a right angle with said first longitudinal branch (6'). Furthermore, a hole (4) with an axis (3') is provided in the lower part of the connecting rod (5).

Finally, the connecting rod (5) is subjected to the action of elastic means such as, as a non restrictive example, a spiral spring (7), with axis (3'), that acts applies a thrust to the rod (5), that tends to rotate around the axis (3'), in the direction indicated by the arrow (8) (figure 2).

A first end of said spring (7) is connected to said rod (5) and the second end of the same is connected to a lever (1), which is an element placed among the members (32) that support the blade holder apparatus, to which said connecting rod (5) is connected in the manner specified below.

Said plate (9) is substantially in contact with said connecting rod (5).

There is a pin (12) which is integral with said plate (9) and that is inserted into the slot (6) of said connecting rod (5), a pin (13), which in a particular configuration of the mechanism rests against an edge (13') of said connecting rod (5) (figure 2) and a pin (14) subjected to the action of elastic means such as a helical spring (15).

A first end of helical spring (15) is connected to said pin (14) whiler the second end is connected to a point (16) which is fixed with respect to the frame.

Said spring (15) applies a tension according in the direction of arrow (15') on said plate (9).

Said slot (6), in which said pin (12) is inserted, is characterised by the fact that the transversal dimension of its branch (6") is wide enough so that there is backlash (12") between the upper edge of said branch and the upper edge of the pin (12), when said pin is located in the lower part of the branch (6') of the hole (6) (see enlarged detail of figure 2). The extent of said backlash (12") is aimed to allow the hooking and lifting manoeuvre, as will be described in further detail here below.

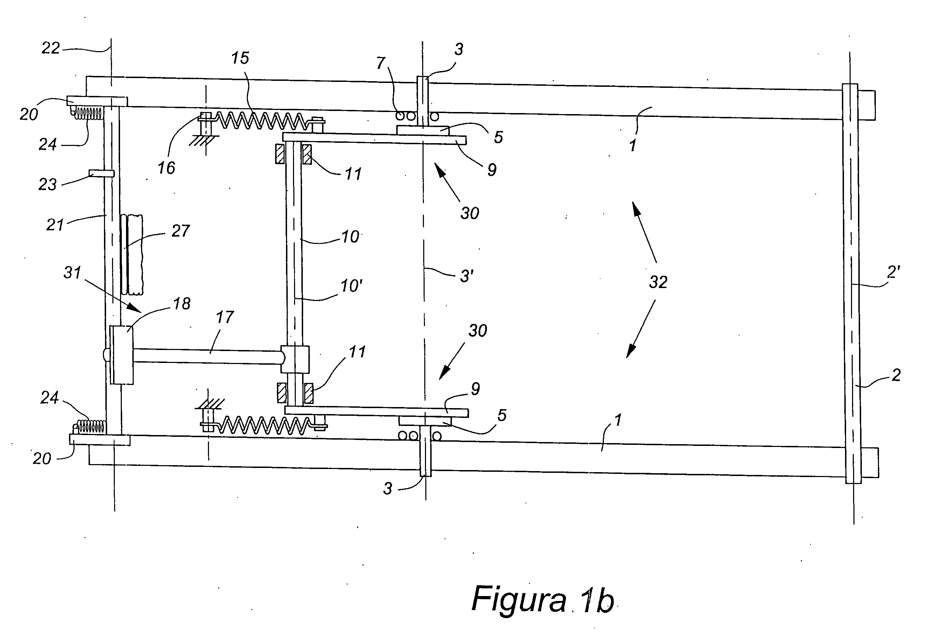

Said manoeuvre members (31) include a shaft (10), actuated by a pedal (18) through a spindle (17), rigidly connected to said shaft (10) having axis (10') (figure 1b), which rotates inside ferrules (11) integral with the frame of the machine.

In a preferred embodiment described, the device according to the invention provides for the use of two hooking and lifting devices (30). The plates (9) of said two devices (30) are connected rigidly to said shaft so that the plain identified by said plates (9) is perpendicular to said axis (10') of said shaft (10).

By pushing down the pedal (18) in the direction indicated by the arrow (18'), the shaft (10) rotates inside the ferrules (11) and makes the plates (9), that are integral with it, to rotate around the axis (10'), overcoming the elastic reaction of the springs (15). In this rotation the pins (12) run along the paths (12') while the pins (13) run along the paths (13').

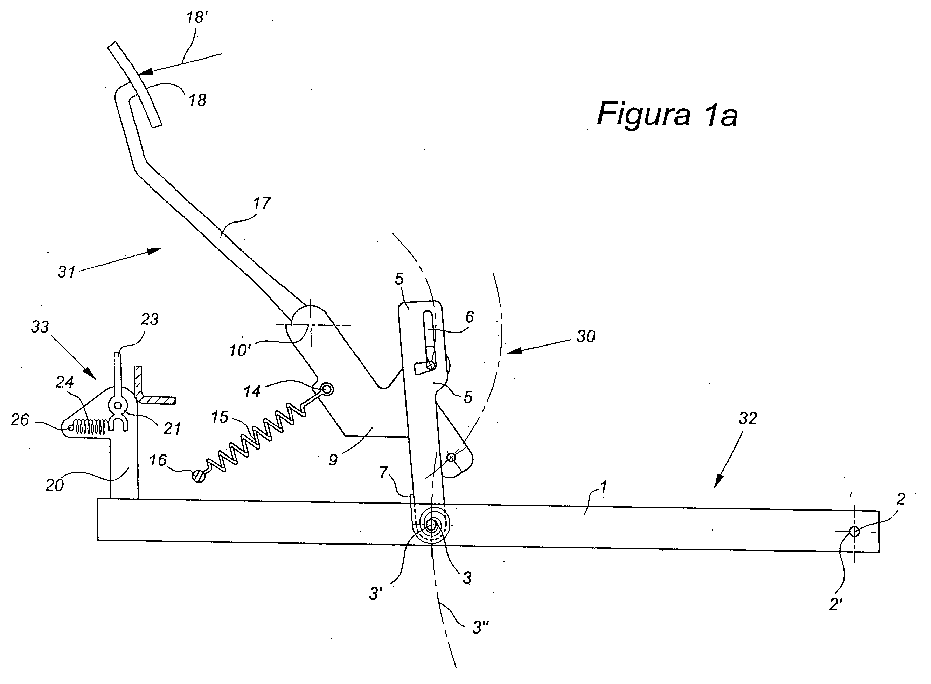

Said support members (32) of the blade holder apparatus include, in the preferred embodiment described, a pair of levers (1) (figure 1 (a, b), which rotate around a pin (2) having axis (2'), integral with the machine frame and substantially parallel to the axis (10'), which is located near a first end of said levers and perpendicular to the same. A blade holder apparatus (not represented) is mounted on said levers, in compliance with a known technique, together with all of the mechanisms required to transmit the rotating movement to said blade.

Rotation of said lever (1) around said pin (2) will lead the pins (3), having an axis (3') located near a second end of said levers (1), to run along a path (3") in such a way that the blade holder apparatus may swing, in a substantially vertical direction, to adapt to the ground.

In the preferred embodiment described, said support members of the blade holder apparatus (32) are connected to the two hooking and lifting devices (30) by the two said pins (3), integral with the respective levers (1), which are inserted into said holes (4) provided in the lower part of the connecting rods (5).

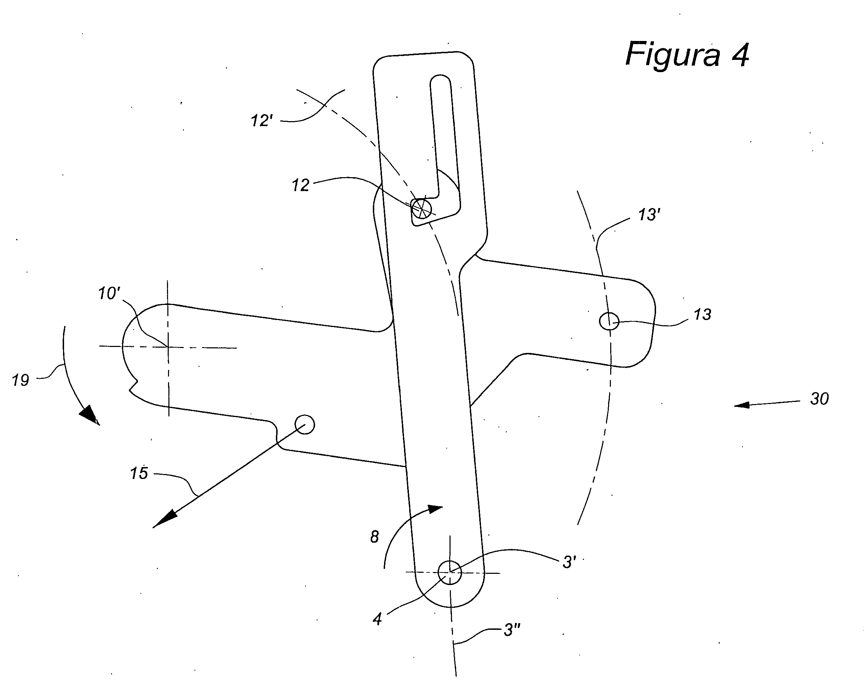

In the preferred embodiment described, said hooking device (33) includes a pair of supports or plates (20) [figures 1 (a, b) and figures 4 (a, b, c)] integral with the levers (1), a beam (21) and a pair of springs (24), for example helical springs, which connect a point (25) of said steel beam with a pin (26) which is integral with said plate (20). Said beam (21) is characterised by the fact that its section has an upside down "U" shape and is mounted between said plates (20), so that it can rotate around an axis (22), that connects the two plates (20). Said helical springs (24) are mounted in such a way as to apply an elastic thrust in the direction indicated by the arrow (24').

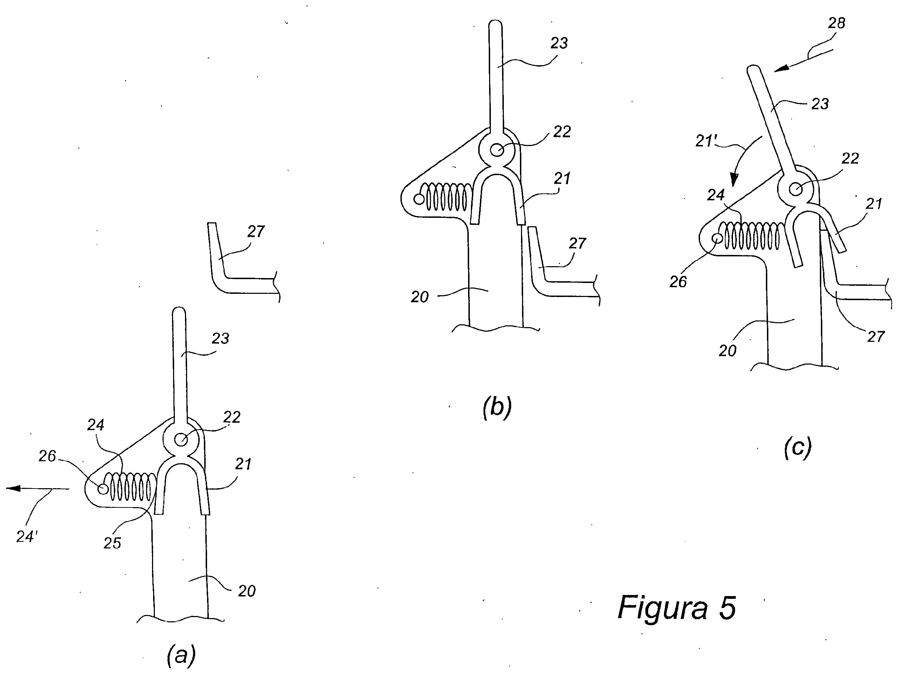

For blocking the blade holder apparatus in its highest position, the steel beam (21) is rotated in the direction indicated by the arrow (21') in such a way that it can engage an element (27) integral with the frame (figure 5c).

Working of the device according to the invention comes about in the following way.

When the lawn mower vehicle is ready to be used on level ground, the device according to the invention is the configuration shown in figure 2.

In said configuration the pins (12) are positioned, in their respective holes (6), at the cross between the branches (6') and (6") of said slots (6) and they press against the lower edge of said slots. In this situation, if the ground descends gradually, the blade holder apparatus can follow the ground since the connecting rods (5) can descend as they are not obstructed by the pins (12), which can run along the branches (6') of the respective slots (6). On the other hand, if the ground rises slightly, the connecting rods (5) push the pins (12) of the plates (9) upwards and the plates themselves carry out a small rotation around the axis (10').

During oscillation the levers (1) could also not remain parallel, allowing the blade holder apparatus to complete a limited swinging movement around a longitudinal axis, once again to favour adaptation of the blade to the type of ground. In this case the axis (3') will no longer be parallel to the axis (2'). This is made possible by the free sliding movement of the pins (12) in the branches (6') of the slots (6).

The spiral springs (7) tend to rotate the connecting rods (5) around the axis (3'), in the direction indicated by the arrow (8). In this way the pins (12) of the plates (9) insert into the branches (6") of the respective slots (6), therefore preventing the vertical movement of the blade holder apparatus. Said rotation is, however, prevented by the contrast applied by the pins (13) of the plates (9) against the edges (13") of the respective connecting rods (5).

When the vehicle comes up against an obstruction, such as for example a gutter or a step or, more simply, it follows a transfer path without cutting the grass, the operator may lift the blade holder apparatus by carrying out a simple operation that consists in pushing the pedal (18), exerting a thrust in the direction indicated by the arrow (18'). Due to the effect of this manoeuvre the plates (9) rotate around the axis (10') while the pins (12) and (13) move respectively along the trajectories (12') and (13').

Movement of the pins (13) along the respective trajectories (13') will lead the pins (13) to move away from the edges (13") of the respective connecting rods (5). At the same time the pins (12) will move along the trajectories (12') but, before the upper edge of said pins (12) is moved by an amount exceeding the backlash (12"), which must therefore be chosen in a suitable way, the pins (13) moved of an amount enough to allow the rotation of the connecting rods (5) in the direction of the arrow (8), through use of the springs (7), so that the pins (12) can insert into the branches (6") of the respective slots (6).

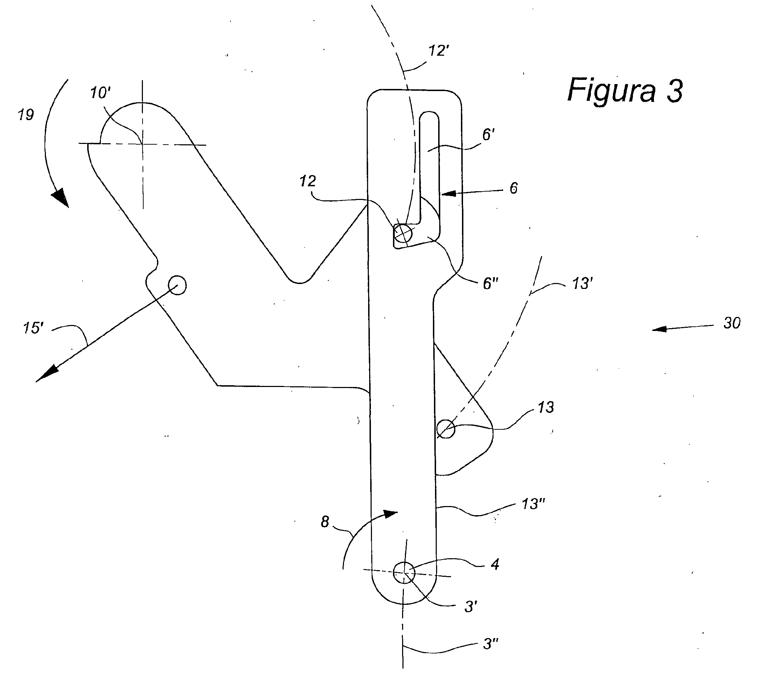

Following the manoeuvre described, the mechanism according to the invention will reach the configuration shown in figure 3, in which a pin (12) inserted into the branch (6") of the respective slots (6) is visible, while a pin (13) is spaced out from the edge (13") of the respective connecting rod (5).

By constantly applying pressure on the pedal (18), the pins (12), following the respective trajectories (12'), will move upwards, lifting the blade holder apparatus due to the effect of the engagement of the pins (12) in the branches (6") of the respective slots (6). The configuration of the hooking and lifting device (30) will be the one illustrated in figure 4.

After the lifting manoeuvre, the hooking device (33), which before lifting is in the position shown in figure 5a, is in the position shown in figure 5b. At this point the operator, by applying a thrust to the lever 23 as indicated by the arrow (28), rotates the beam (21) around he axis (22) in the direction indicated by the arrow (21'), winning the elastic reaction of the spring (24).

Releasing the pedal (18), the levers (1) and consequently the plates (20) integral with the same, will move downwardly just of the necessary amount, so that the beam (21) can engage the member (27), which is integral with the frame, blocking in this way the entire mechanism.

In order to release the mechanism it is sufficient to press the pedal (18) once again so that said mechanism is raised of an amount enough to bring the beam (21) above the member (27). In this way, due to the effect of the elastic reaction of the spring (24), the beam (21) rotates in the opposite direction to the arrow (21'), releasing the member (27), therefore allowing the mechanism to take up its working position once again.

The device according to the invention has been described according to a preferred embodiment. Those skilled in the art may find other embodiments, for example with a single hooking and lifting device (30) that lifts a single lever (1) to which it is hooked, through the use of an equalizer, the blade holder, or a single hooking and lifting device (30) which lifts two levers (1) through the use of an equalizer, as said embodiments and variations are all comprised in this present invention.

The advantage of the device according to the invention compared with the present state of the art, consists in the possibility of offering non professional users of the machines, therefore at prices compatible with such products, a lawn mower vehicle fitted with a lifting device of the blade holder apparatus, which allows for all manoeuvres to be carried out comfortably and in complete safety, in particular without having to step out of the vehicle and touching the lifting levers.

## Claims

1. A lawn mower vehicle fitted with a lifting device of the blade holder apparatus, **characterised by** the fact that it includes:
• support members (32) of the blade holder apparatus,
• at least one connecting rod (5) hinged to said support members,
• manoeuvre means (31) activated directly from the guiding position,
• at least one plate (9) which is integral with said means of manoeuvre,
• means of engagement of said plate (9), in said connecting rod (5), which allow said plate and said connecting rod to reach various mutual positions between an initial position in which said blade holder apparatus is lifted, and a second position in which said apparatus is released,
• a hooking device aimed at blocking the entire mechanism in its highest position.

2. The vehicle according to claim 1 **characterised by** the fact that said means of engagement include means aimed at guiding the mutual sliding of said connecting rod with respect to said plate and means aimed at limiting the rotation of said connecting rod with respect to said plate.

3. The vehicle according to claim 2 **characterised by** the fact that said means aimed at guiding the mutual sliding of the connecting rod (5) with respect to the plate (9) include a pin (12) integral with said plate (9), which engages a slot (6) provided in the connecting rod (5), said slot having a first part (6') aimed at allowing for vertical sliding of said connecting rod and a second part (6"), substantially transversal with respect to said connecting rod, aimed at preventing the vertical sliding of said connecting rod.

4. The vehicle according to claim 2 **characterised by** the fact that said means aimed at limiting the rotation of said connecting rod (5) with respect to said plate (9) include a pin (13) integral with said plate (9), which is in contact with an edge (13") of said connecting rod (5).

5. The vehicle according to claims 2 and 3, **characterised by** the fact that the transversal dimension of said branch (6") of said slot (6) is wide enough that there is a backlash (12") between the upper edge of said branch and the upper edge of the pin (12) when said pin is in the lower part of the branch (6') of the slot (6), said backlash (12") being greater than a movement that the pin (12) undergoes along a trajectory (12'), subsequent to a rotation of the plate (9) necessary to release the connecting rod (5).

6. The vehicle according to previous claims, **characterised by** the fact that said connecting rod (5) is subjected to the action of elastic means aimed at rotating said connecting rod around an axis (3'), in order to bring said pin (12) of said plate (9) to engage said branch (6") of said slot when said pin (12) is in the middle of said branches (6') and (6") and said pin (13) of said plate (9) is not resting against said edge (13') of said connecting rod (5).

7. The vehicle according to claim 6, **characterised by** the fact that said elastic means include a spiral spring (7) with axis (3'), a first end of which acts against said connecting rod (5) and the second end of which acts against a lever (1), which is a part of said support members (32) of the blade holder apparatus, to which said connecting rod (5) is hinged.

8. The vehicle according to claim 1 **characterised by** the fact that:
said plate (9), which is integral with a shaft (10) which is part of said means of manoeuvre (31), is integral with a pin (12) aimed at guiding the mutual sliding of the connecting rod (5) with respect to the plate (9), said pin (12) being inserted in a sliding manner in a slot (6) provided in the connecting rod (5); said slot having a first branch (6'), which extends substantially longitudinally, with respect to the axis of said connecting rod (5) and a second branch (6") that is substantially orthogonal with respect to said connecting rod, so as to prevent the vertical sliding of said connecting rod;
and a pin (13) bearing limiting the rotation of said connecting rod (5) with respect to said plate (9), said pin (13) bearing against the edge (13") of the connecting rod (5); said connecting rod (5) being hinged to a lever (1), which is part of said support members (32) of the blade holder apparatus, around said axis (3') and being subjected to the action of a spiral spring (7) having axis (3'), said spring (7) being interposed between said connecting rod (5) and said lever (1) so as to rotate around an axis (3') and engaging said pin (12) of said plate (9) in said branch (6") of said slot (6) when said pin (12) is between said branches (6') and (6") and said pin (13) is not supported against said edge (13") of said connecting rod (5).

9. The vehicle according to claim 1 **characterised by** the fact that said hooking device (33) includes
• a pair of supports (20), which are integral with said support members (32) of the blade holder apparatus;
• a beam (21) aimed at rotating around an axis (22) between a first position corresponding in which the mechanism is free and a second position, in which the mechanism is blocked;
• a lever (23) which is integral with said beam (21); and
• elastic means (24), aimed at bringing said beam (21) in said first position in which the mechanism is free.

10. The vehicle according to claim 9 **characterised by** the fact that the steel beam (21) has an upside down "U" shape, a branch of said upside down "U" engaging a member (27) which is integral with the frame when said beam (21) is rotated around the axis (22) because of a thrust applied on a lever (23) integral with said beam.
